# EUROPEAN PATENT APPLICATION

(11) **EP 4 597 953 A1**
(43) Date of publication of application: **06.08.2025**
(21) Application number: 22960173.7
(22) Date of filing: 29.09.2022
(51) Int. Cl.: H04L 27/00

(54) **SWITCH CONTROL METHOD, INFORMATION INDICATION METHOD, REPEATER, AND NETWORK DEVICE**

(71) Applicant: FUJITSU LIMITED, Kawasaki-shi, Kanagawa 211-8588 (JP)
(72) Inventor: JIANG, Qinyan, Beijing 100022 (CN); ZHANG, Lei, Beijing 100022 (CN); TIAN, Yan, Beijing 100022 (CN)
(74) Representative: Haseltine Lake Kempner LLP
(86) International application number: PCT/CN2022/122930
(87) International publication number: WO 2024/065538

(57) **Abstract**

Embodiments of this disclosure provide an on-off control method, an information indication method, a repeater and a network device. The method includes: performing random access by a mobile termination of the repeater; and being in an off state by a forwarding unit of the repeater when the mobile termination of the repeater transmits a random access preamble.

## Description

### Technical Field

This disclosure relates to the field of communication technologies.

### Background

Compared with traditional 3G (third generation mobile communication technology) and 4G (fourth generation mobile communication technology) systems, a 5G (fifth generation mobile communication technology) system is able to provide larger bandwidths and higher data rates, and is able to support more types of terminals and vertical services.

For this reason, 5G systems are also deployed at new frequency bands, which are obviously higher than those of 3G and 4G systems. For example, a 5G system may be deployed in a millimeter waveband (such as 28 GHz, 38GHz, 60 GHz, and higher wavebands).

According to the principle of propagation of wireless signals, the higher a carrier frequency, the more severe a fading experienced by signals during transmission. Therefore, in actual deployment, a 5G system needs a cell coverage enhancement method more than 3G and 4G systems need, especially a 5G system deployed in a millimeter waveband. Hence, how to better enhance cell coverage has become an urgent problem to be solved.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In order to better solve the coverage problem of cellular mobile communication systems in practical deployment, use of a radio frequency (RF) relay/repeater to amplify and forward signals between a terminal equipment and a network device is commonly used means of deployment. RF repeaters are widely used in actual deployment of 3G and 4G systems. Generally speaking, an RF repeater is a device that amplifies and forwards signals between devices in the RF domain. That is, an RF repeater is a non-regenerative relay node, which only directly amplifies and forwards all received signals.

It was found by the inventors that a traditional RF repeater is unable to exchange information with other devices (e.g. a network device/terminal equipment, etc.). Specifically, in terms of reception, a traditional RF repeater does not support measuring/demodulating/decoding forwarded signals, nor does it receive signals outside of the forwarded signals. In terms of transmission, a traditional RF repeater only amplifies and forwards signals, and does not support generating signals and transmitting signals generated by itself. Therefore, the forwarding behavior of a traditional RF repeater is not controlled by a network (such as via a network device, etc.). For example, on-off state of the repeater is usually set manually.

It was realized by the inventors that ON/OFF of a traditional repeater is/are usually set manually, which is unable to dynamically match data transmission between a network device and a UE. In general, data transmission is not constantly performed between the network device and the UE, and if the repeater is also in an on state when there is no data transmission between the network device and the UE, unnecessary power consumption is increased on one hand, and on the other hand, interference to other devices may be caused, thereby reducing network throughput. Hence, compared with traditional RF repeaters, NCR needs to have a function of controlling ON/OFF of forwarding units.

However, there is currently no method for how to control ON/OFF state(s) of forwarding units.

In addition, on the premise that NCR has a function of controlling ON/OFF of forwarding units, how an NCR-MT performs uplink and downlink transmission, and/or how to perform measurement, and/or how to handle after the NCR-MT enters idle/inactive states, have become urgent problems to be solved.

In order to solve at least one of the above problems, embodiments of this disclosure provide an on-off control method, an information indication method, a repeater and a network device.

According to one aspect of the embodiments of this disclosure, there is provided an on-off control method, including:
performing random access by a mobile termination of a repeater; and
forwarding unit of the repeater being in an off state when the mobile termination of the repeater transmits a random access preamble.

According to another aspect of the embodiments of this disclosure, there is provided a repeater, including:
a mobile termination configured to perform random access; and
a forwarding unit; the forwarding unit is in an off state when the mobile termination of the repeater transmits a random access preamble.

According to a further aspect of the embodiments of this disclosure, there is provided an information indication method, including:
transmitting indication information indicating ON/OFF of a forwarding unit of a repeater by a network device to a mobile termination of the repeater, and/or,
transmitting second indication information by the network device to the mobile termination of the repeater, the second indication information being used to indicate that the forwarding unit performs or does not perform forwarding when the mobile termination is in an RRC_IDLE state or RRC_INACTIVE state.

According to still another aspect of the embodiments of this disclosure, there is provided a network device, including:
a transmitting unit configured to transmit indication information indicating ON/OFF of a forwarding unit of a repeater to a mobile termination of the repeater, and/or,
transmit second indication information to the mobile termination of the repeater, the second indication information being used to indicate that the forwarding unit performs or does not perform forwarding when the mobile termination is in an RRC_IDLE state or RRC_INACTIVE state.

According to yet another aspect of the embodiments of this disclosure, there is provided a communication system, including the repeater as described in the another aspect and/or the network device as described in the still another aspect.

An advantage of the embodiments of this disclosure exists in that taking a relationship between the NCR-MT and NCR-Fwd into account, ON/OFF of the forwarding unit of the repeater are controlled, so that the time-domain resources to which the on state of the forwarding unit match with the time-domain resources of the data transmission between the network device and the terminal equipment, thereby saving power consumption of the repeater, reducing interference, and improving network throughput.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is schematic diagram of an application scenario of embodiments of this disclosure;
FIG. 2 is a schematic diagram of NCR of embodiments of this disclosure;
FIG. 3 is a schematic diagram of the on-off control method of an embodiment of this disclosure;
FIG. 4 is a schematic diagram of the information indication method of embodiments of this disclosure;
FIG. 5 is a schematic diagram of the repeater of embodiments of this disclosure;
FIG. 6 is a schematic diagram of the information indication method of embodiments of this disclosure;
FIG. 7 is a schematic diagram of the network device of embodiments of this disclosure; and
FIG. 8 is a schematic diagram of the electronic device of embodiments of this disclosure.

### Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "a terminal equipment (TE) or a terminal equipment" refers to, for example, an equipment accessing to a communication network and receiving network services via a network device. The terminal equipment may be fixed or mobile, and may also be referred to as a mobile station (MS), a terminal, a subscriber station (SS), an access terminal (AT), an IAB-MT, or a station, etc.

The terminal equipment may include but not limited to the following devices: a cellular phone, a personal digital assistant (PDA), a wireless modem, a wireless communication device, a hand-held device, an MAChine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In order to enhance coverage, an RF repeater is introduced into research of 3GPP Rel-17 to forward transmission between a terminal equipment (UE) and a network device (base station). For the network device and the terminal equipment, the RF repeater introduced into 3GPP Rel-17 is transparent, that is, both the network device and the terminal equipment are unaware of existence of the RF repeater.

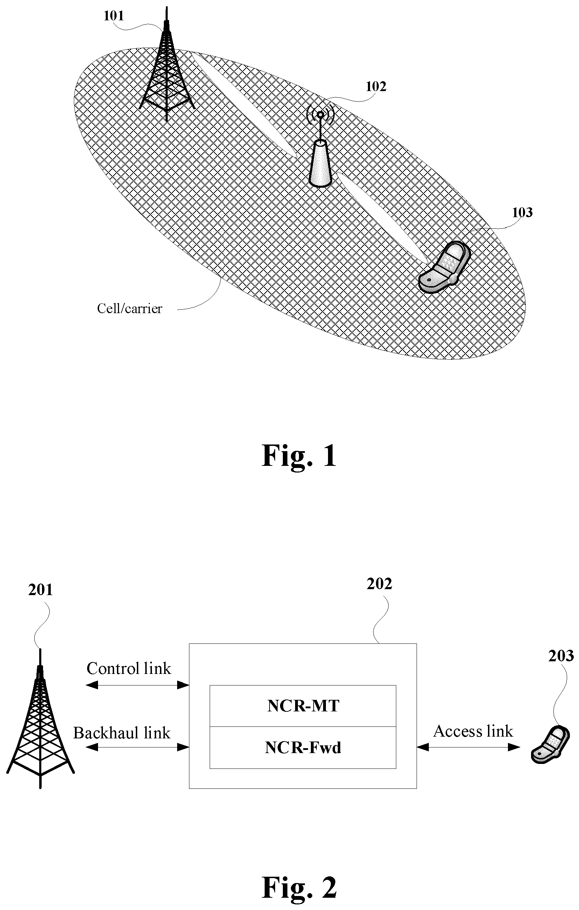

FIG. 1 is schematic diagram of an application scenario of embodiments of this disclosure. As shown in FIG. 1, for the sake of description, the description shall be given by taking a network device (such as a 5G gNB) 101, a repeater 102 and a terminal equipment (UE) 103 as examples; however, this disclosure is not limited thereto.

As shown in FIG. 1, the terminal equipment 103 may establish connection with the network device 101 and communicate therewith. In order improve communication quality, channels/signals between the terminal equipment 103 and the network device 101 are forwarded by the repeater 102. Exchange of channels/signals between the network device 101, the terminal equipment 103 and the repeater 102 is performed in a method of reception and transmission based on beams.

As shown in FIG. 1, the network device 101 may have a cell/a carrier, and the network device 101, the repeater 102 and the terminal equipment 103 may perform forwarding/communication at the cell; however, the embodiments of this disclosure are not limited thereto, for example, the network device 101 may have other cells/carriers.

In the embodiments of this disclosure, existing traffics or traffics that may be implemented in the future may be performed between the network device and the terminal equipment. For example, such traffics may include but not limited to enhanced mobile broadband (eMBB), massive machine type communication (mMTC), ultra-reliable and low-latency communication (URLLC), and Vehicle to Everything (V2X), etc.

A conventional repeater does not have an ability to communicate with a network device. Hence, although a conventional repeater is helpful to enhance signal strengths, it is not flexible enough to cope with complex environmental changes. Deploying a conventional repeater in a 5G network (especially a high-frequency 5G network) may possibly cause unnecessary interference to other network devices and/or terminal equipments, thereby reducing transmission efficiency (such as throughput) of the entire network. In order that forwarding of the repeater is more flexible to be adapted to characteristics of the 5G network, the network device needs to assist the repeater, and configure forwarding of the repeater according to network conditions.

A network controlled repeater (NCR) scheme is proposed in 3GPP Rel-18 to enhance NR coverage, so as to forward signals between a network device and a terminal equipment. NCR may directly communicate with the network device via control links to assist in forwarding operations of the NCR.

FIG. 2 is a schematic diagram of the NCR in embodiments of this disclosure. As shown in FIG. 2, NCR 202 is configured between the network device 201 and the terminal equipment 203. NCR 202 may include the following two units/components: a mobile termination of the repeater (NCR-MT) and a forwarding unit of the repeater. (NCR-Fwd) The NCR-Fwd may also be referred to as a routing unit of the NCR (NCR-RU). The NCR-MT is used for communication with the network device, the NCR-Fwd is used for forwarding signals between the network device and the terminal equipment, and the NCR-MT and NCR-Fwd are functional entities, with functions thereof being implemented by identical or different hardware modules.

As shown in FIG. 2, the NCR of the embodiments of this disclosure may have three links: a control link (C-link), a backhaul link (BH link) for forwarding, and an access link (AC link), wherein the C-link is used for communication between the NCR and the network device, the BH link is used by the repeater to receive signals to be forwarded from the network device, or forward signals from the terminal equipment to the network device, and the AC link is used by the repeater to forward signals from the network device to the terminal equipment, or receive signals to be forwarded from the terminal equipment.

Various implementations of the embodiments of this disclosure shall be described below with reference to the accompanying drawings. These implementations are exemplary only, and are not intended to limit this disclosure.

In the embodiments of this disclosure, the repeater may communicate with the network device, receive communication channels/signals transmitted by the network device, and demodulate/decode the channels/signals to obtain information transmitted by the network device to the repeater. A signal processing process is hereinafter referred to as "communication". The repeater may also forward channels/signals transmitted between the network device and the terminal equipment, does not demodulate/decode the channels/signals, and may perform amplification, etc. A signal processing process is hereinafter referred to as "forwarding", and "communication" and "forwarding" are collectively referred to as "transfer". In addition, 'performing transmission or reception on the AC link (by using beams)' may be equivalent to 'performing forwarding on the AC link (by using beams)', and 'performing transmission or reception on the control link' may be equivalent to 'performing communication on the control link'. The above terms are for convenience of explanation only, and are not intended to limit this disclosure.

For the sake of convenience, channels/signals for direct communication between a network device and a repeater or between a third equipment (such as a terminal equipment) and the repeater may be referred to as communication signals. When communication signals are transmitted, the repeater needs to perform encoding and/or modulation, and when communication signals are received, the repeater needs to perform decoding and/or demodulation. In addition, channels/signals forwarded by the repeater may be referred to as forwarded signals, and the repeater may amplify the forwarded signals, but does not perform decoding and/or demodulation.

In the embodiments of this disclosure, the repeater may also be expressed as an NCR, an RF repeater, a relay, an RF relay; or, it may also be expressed as a repeater node, or a relay node; or, it may also be expressed as an intelligent repeater, an intelligent relay, an intelligent repeater node, an intelligent relay node, etc.; however, this disclosure is not limited thereto.

In the embodiments of this disclosure, the network device may be a device of a serving cell of the terminal equipment, or a device in a cell where the repeater is located, or a device of a serving cell of the repeater, or a parent node of the repeater. Names of the repeater are not limited in this disclosure, and any device able to achieve the above functions is included in the scope of the repeater of this disclosure.

In the embodiments of this disclosure, the beam may also be expressed as a reference signal (RS), a transmission configuration indication (TCI), or a spatial domain filter, etc., or may be expressed as a beam index, a reference signal index, a transmission configuration indication index, or a spatial domain filter index, etc. The above reference signal is, for example, a channel state information reference signal (CSI-RS), or a sounding reference signal (SRS), or an RS for use by the repeater, or an RS transmitted by the repeater, etc. And the above TCI may also be expressed as a TCI state; however, the embodiments of this disclosure are not limited thereto.

Following description shall be given with reference to the embodiments.

### Embodiments of a first aspect

The embodiments of this disclosure provide an on-off control method, which shall be described from a side of a repeater.

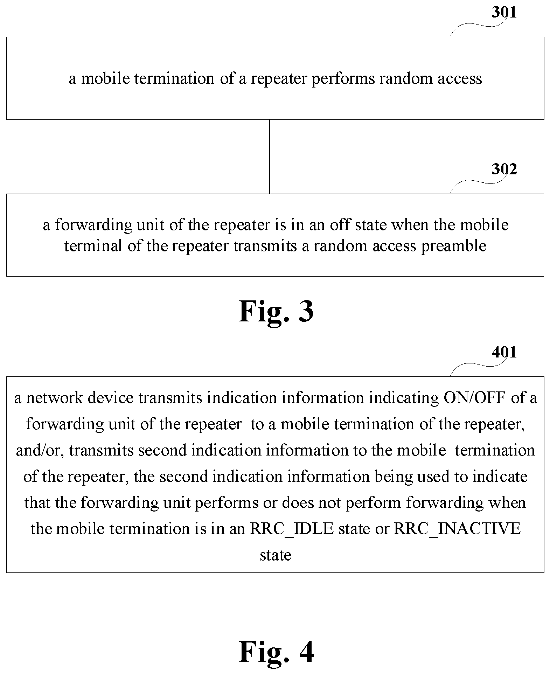

FIG. 3 is a schematic diagram of the on-off control method of the embodiments of this disclosure. As shown in FIG. 3, the method includes:
301: a mobile termination of a repeater performs random access; and
302: a forwarding unit of the repeater is in an off state when the mobile termination of the repeater transmits a random access preamble.

It should be noted that FIG. 3 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 3.

In some embodiments, the mobile termination of the repeater (hereinafter referred to as an NCR-MT) and the forwarding unit of the repeater (NCR-Fwd) are both functional entities in the repeater, the NCR-Fwd and NCR-MT have or do not have a capability to simultaneously transmit signals or simultaneously receive signals, and the method may further include: transmitting capability indication information indicating the capability by the NCR-MT to the network device.

In some embodiments, simultaneously transmitting by the NCR-Fwd and NCR-MT refers to transmitting uplink signals by the NCR-MT to the network device and (receiving uplink signals to be forwarded to the network device from the UE and) forwarding the uplink signals from the UE by the NCR-Fwd to the network device, and simultaneously receiving by the NCR-Fwd and NCR-MT refers to receiving downlink signals from the network device by the NCR-MT and receiving downlink signals to be forwarded to the UE from the network device (and forwarding them to the UE) by the NCR-Fwd, wherein the downlink signals to be forwarded to the UE include or do not include the downlink signals received by the NCR-MT.

In some embodiments, the NCR-Fwd and NCR-MT do not have the capability to simultaneously transmit and/or receive signals, and the NCR-MT may or may not transmit the capability indication information to the network device. The NCR-Fwd and NCR-MT have the capability to simultaneously transmit or receive signals, and the NCR-MT transmits the capability indication information to the network device, such as reporting the capability indication information separately for whether to simultaneously transmit signals and whether to simultaneously receive signals.

In some embodiments, the capability indication information is used to indicate whether the NCR-Fwd and NCR-MT have a capability to simultaneously transmit and/or simultaneously receive signals. If the NCR-Fwd and NCR-MT do not have the capability to simultaneously transmit and/or simultaneously receive signals, the NCR-MT transmits the capability indication information to the network device to indicate that the NCR-Fwd and NCR-MT do not have the capability to simultaneously transmit and/or simultaneously receive signals. If the NCR-Fwd and NCR-MT have the capability to simultaneously transmit and/or simultaneously receive signals, the NCR-MT transmits the capability indication information to the network device indicating that the NCR-Fwd and NCR-MT have the capability to simultaneously transmit and/or simultaneously receive signals.

In some embodiments, the capability indication information is used to indicate that the NCR-Fwd and NCR-MT have the capability to simultaneously transmit and/or simultaneously receive signals. If the NCR-Fwd and NCR-MT do not have the capability to simultaneously transmit and/or simultaneously receive signals, the NCR-MT does not transmit the capability indication information to the network device.

In some embodiments, that the NCR-Fwd and NCR-MT do not have the capability to simultaneously transmit signals may also be said that the NCR-Fwd and NCR-MT are TDM in uplink, and that the NCR-Fwd and NCR-MT do not have the capability to simultaneously receive signals may also be said that the NCR-Fwd and NCR-MT are TDM in downlink. The above capability indication information may also be said that it is used to indicate whether the NCR-Fwd and NCR-MT are time-division multiplexed (TDM) in uplink and/or downlink, or that it is used to indicate that the NCR-Fwd and NCR-MT are not time-division multiplexed in uplink and/or downlink.

For example, the NCR-Fwd and NCR-MT are time-division multiplexed (TDM) or are not TDM, and the NCR-MT may report whether it is TDM with the NCR-Fwd and NCR-MT to the network device, such as reporting whether they are TDM for the uplink and downlink separately.

In some embodiments, in 301, the NCR-MT is in the RRC_IDLE state or RRC_CONNECTED state or RRC_INACTIVE state, and performs random access.

For example, the NCR-MT initiates random access for at least one of the following:
initial access from an RRC_IDLE state;
an RRC connection re-establishment procedure;
   DL/UL data arrival, during RRC_CONNECTED state or during the RRC_INACTIVE state (while SDT procedure is ongoing), when UL synchronization status is "non-synchronised";
   UL data arrival, during RRC_CONNECTED state or during RRC_INACTIVE state (while SDT procedure is ongoing), when there are no PUCCH resources for SR available;
   SR failure;
   synchronous reconfiguration (e.g. handover) triggered/requested by RRC;
   RRC connection resume procedure from RRC_INACTIVE state;
   request for other SIs;
   beam failure recovery;
   consistent UL LBT failures on an SpCell;
   SDT in RRC_INACTIVE state; and
   positioning during RRC_CONNECTED state (e.g. when TA is needed for positioning).

The above random access includes contention-based random access and/or contention-free random access. For example, it includes two times of interaction between the network device and the NCR-MT (4-step RA), in the first time of interaction, the NCR-MT initiates a random access request (MSG1, including transmitting a random access preamble or transmitting a physical random access channel PRACH) and receives a random access response (MSG2) fed back by the network device, and in the second time of interaction, the NCR-MT transmits information containing an identification to the network device (MSG3) and receives MSG4 fed back by the network device; or, the random access may also be a 2-step random access (2-step RA), in which original MSG1 and MSG3 are combined into a new MSGA, and MSG2 and MSG4 are combined into MSGB. Reference may be made to the related art for detail, which shall not be repeated herein any further.

In some embodiments, in 302, the ON/OFF state(s) of the NCR-Fwd is/are related to the NCR-MT, and when the NCR-MT transmits a random access preamble, the NCR-Fwd is in the off state (a transmitter is turned off, and is unable to perform a forwarding behavior), that is, before the NCR-MT transmits the random access preamble, the NCR-Fwd enters (is transferred) into the off state, and if the NCR-Fwd is currently in the on state, it is able to be in the off state only after a short period of transferring time after the NCR-Fwd enters (is transferred) into the off state.

For example, before performing the random access (or before transmitting the random access preamble for the first time), the NCR-MT receives a first paging message. The first paging message triggers the random access in 301, and after the NCR-MT receives the first paging message, the NCR-Fwd enters the off state.

In some embodiments, the method may further include: when the NCR-MT transmits MSG. 3 and/or HARQ-ACK information of MSG. 4 and/or HARQ-ACK information of MSG. 2 (RAR), and/or when the NCR-MT receives MSG. 2 and/or MSG. 4, the NCR-Fwd is in the off state (by default).

In some embodiments, the method may further include: when the NCR-MT performs random access, the NCR-Fwd is in the off state (default). Here, throughout the entire random access procedure, the NCR-Fwd is in the off state (by default), which differs from the previous embodiments in that interval times between transmission and reception of MSGs are included.

In some embodiments, the method may further include: the NCR-MT receives, fifth indication information transmitted by the network device, the fifth indication information being used to indicate that the NCR-Fwd is on or off when the NCR-MT performs the random access, that is, the NCR-Fwd needs to determine a state of the forwarding behavior when the NCR-MT is performing the random access according to the fifth indication information, rather than the default state.

In some embodiments, regarding when/how/whether to enter the on state, the method may further include: NCR-Fwd does not enter into the on state (or maintains in the off state) before the NCR-MT successfully completes the random access, or, NCR-Fwd does not enter into the on state (or maintains in the off state) before the NCR-MT receives fourth indication information indicating that the NCR-Fwd is on.

The fourth indication information and/or the fifth indication information shall be described later.

In some embodiments, a random access resource (PRACH occasion) used for the NCR-MT to transmit the random access preamble is dedicated, that is, a PRACH occasion allocated by the network device to for the NCR-MT and PRACH occasions allocated for other devices (such as the UE) may be distinguished. If the network device receives a random access preamble, it may determine according to a PRACH occasion used for transmitting the random access preamble whether the random access preamble is transmitted by the NCR-MT. At this point, for the (dedicated) random access resource used for the NCR-MT to transmit a random access preamble (or for a (dedicated) random access resource corresponding to the PRACH occasion allocated for the NCR-MT), the NCR-Fwd is in the off state (by default).

The ON/OFF state(s) of the NCR-Fwd during the random access procedure of the NCR-MT is described in the above embodiments. Influence of the switching state of the NCR-Fwd on the random access procedure of the NCR-MT shall be described below.

In some embodiments, the NCR-MT receives one or more third indication information before performing the random access, the one or more third indication information being used to indicate ON/OFF of the NCR-Fwd.

In some embodiments, a time-domain resource (second time-domain resource) when the NCR-Fwd is indicated (by third indication information) as being in the off state includes the random access resource used for transmitting the random access preamble (or the random access resources corresponding to the PRACH occasion). Or, when the random access resource (PRACH occasion) used for the NCR-MT to transmit the random access preamble is dedicated, the time-domain resource when the NCR-Fwd is indicated as being in the off state includes the (dedicated) random access resource used for the NCR-MT to transmit the random access preamble (or the (dedicated) random access resource corresponding to the PRACH occasion allocated for the NCR-MT).

In some embodiments, when the network device is able to determine (distinguish) whether the random access procedure in 301 is performed by the NCR-MT, the time-domain resource (second time-domain resource) when the NCR-Fwd is indicated as being in the off state includes a time-domain resource for transmitting HARQ-ACK information of MSG.3 and/or MSG.4 and/or HARQ-ACK information of MSG.2 (RAR), wherein the third indication information is received before the HARQ-ACK information of MSG.3 and/or MSG.4 and/or the HARQ-ACK information of MSG.2 (RAR) is/are transmitted; or, it may include a time-domain resource for receiving MSG.2 and/or MSG.4, wherein the third indication information is received before MSG.2 and/or MSG.4 is/are received. That is, the random access procedure may possibly be initiated by the NCR-MT, or may possibly be initiated by the terminal equipment. When the network device is able to determine that the random access procedure is initiated by the NCR-MT, the time-domain resource (second time-domain resource) when the NCR-Fwd is indicated as being in the off state includes the time-domain resource used for transmitting the HARQ-ACK information of MSG.3 and/or MSG.4 and/or the HARQ-ACK information of MSG.2 (RAR).

Or, in some embodiments, the NCR-MT selects random access resources (for transmitting the random access preamble) according to ON/OFF state(s) indicated by the one or more third indication information.

For example, the random access resources selected by the NCR-MT are within the time-domain resource when the NCR-Fwd is in the off state (which may be indicated by one third indication information, or may be determined according to indications of multiple third indication information and a predefined rule).

In some embodiments, that a random access resource selected by the NCR-MT are within the time-domain resources when the NCR-Fwd is in the off state includes that (an MAC layer of) the NCR-MT selects a random access resource from valid the random access resources, and a random access resource overlapped with the time-domain resources of the NCR-Fwd in the off state is invalid.

And/or, in some embodiments, that the random access resources selected by the NCR-MT are within the time-domain resources when the NCR-Fwd is in the off state includes that if the random access resources selected by (an MAC layer of) the NCR-MT are within the time-domain resources when the NCR-Fwd is on, (the MAC layer of) the NCR-MT reselects random access resources. When a random access resource selected by the NCR-MT are within the time-domain resources when the NCR-Fwd is in the on state, the selected random access resource are not indicated to a physical layer of the repeater (NCR-MT).

The third indication information shall be described later.

In some embodiments, when a random access resource selected by the NCR-MT overlaps with time-domain resources of the NCR-Fwd that are predefined or indicated as being on, the NCR-MT does not transmit a random access preamble on the random access resource. How to determine the time-domain resources of the NCR-Fwd that are predefined or indicated as being on shall be described later. That is, for a part or all of the time-domain resources selected by the NCR-MT to which a PRACH occasion corresponds, if the NCR-Fwd is predefined or indicated as being in the on state, (the physical layer of) the NCR-MT does not transmit a random access preamble on the selected time-domain resources to which the PRACH occasion corresponds.

In some embodiments, when a random access resource selected by the NCR-MT overlap with the time-domain resources when the NCR-Fwd is predefined or indicated as being in the on state, as described above, (the physical layer of) the NCR-MT does not transmit a random access preamble on the random access resource, and (the MAC layer of) the NCR-MT may reselect random access resource.

In the above embodiments, not transmitting the random access preamble by (the physical layer of the NCR-MT) of the repeater on the random access resource overlapping with the random access resource when the NCR-Fwd is on (in other words, not transmitting the random access preamble due to that the selected random access resource overlapping with the random access resource when the NCR-Fwd is on ) is counted or not counted for one time of random access attempt. Transmission power for transmitting the random access preamble on the reselected random access resource by the NCR-MT ramps up or does not ramp up.

For example, being counted for one time of random access attempt is adding 1 to a counter that counts the number of times of random access attempt, and adding 1 or not adding 1 to a counter used to calculate transmission power of the PRACH for the next time of random access attempt.

In the above embodiments, the random access resource refer to time-frequency domain resources used for transmitting random access preambles or PRACHs, that they overlap with the random access resource when the NCR-Fwd is in the on state refers to that they overlap with the random access resource when the NCR-Fwd is in the on state, and that they overlap with the random access resource when the NCR-Fwd is in the off state refers to that they overlap with the random access resource when the NCR-Fwd is in the off state. The random access resource is referred to as, for example, PRACH resource or RACH resource.

The relationship between the random access procedure of the NCR-MT and the ON/OFF state(s) of the NCR-Fwd is described above.

Relationships between other uplink and downlink transmission procedures, measurement procedures of the NCR-MT and the ON/OFF state(s) of the NCR-Fwd shall be described below.

In some embodiments, when the NCR-MT receives a synchronization signal block and/or a system information (SIB) block and/or a paging message and/or a first reference signal, the NCR-Fwd is in the off state (by default).

Or, the NCR-MT receives a synchronization signal block and/or a system information (SIB) block and/or a paging message and/or a first reference signal on other time-domain resources than those of the NCR-Fwd pre-defined or indicated as being in the on state.

Or, the network device indicates an NCR-MT synchronization signal block index or synchronization signal block time-domain index, the index being used to receive a synchronization signal block and/or a system information (SIB) block and/or a paging message and/or a first reference signal, such as being used for the NCR-MT to determine a time-domain resource and/or a network device side or C-link beam for receiving a synchronization signal block and/or a system information (SIB) block and/or a paging message and/or a first reference signal. The time-domain resources (second time-domain resources) of the NCR-Fwd indicated as being in the off state includes time-domain resources for receiving a synchronization signal block and/or a system information (SIB) block and/or a paging message and/or a first reference signal, or the the NCR-Fwd is/are off by default on time-domain resources for receiving a synchronization signal block and/or a system information (SIB) block and/or a paging message and/or a first reference signal.

The above embodiments regarding random access and other uplink and downlink transmission procedures are applicable to the case where the NCR-MT and NCR-Fwd have no capability to simultaneously receive and/or simultaneously transmit signals. The above embodiments are also applicable to the case where the NCR-MT and NCR-Fwd have a capability to simultaneously receive and/or simultaneously transmit signals, such as applicable to a case where the NCR-MT and NCR-Fwd need to use the same beam to receive and forward, a beam used by the NCR-MT for performing random access or receiving the synchronization signal block and/or the system information (SIB) block and/or the paging message may possibly not be the optimal beam of the NCR-Fwd, and at the same time, the network device may possibly not know that the NCR-Fwd is unable to use its optimal beam, thereby making the beam used by the NCR-Fwd in the on state completely controlled by the network device and the optimal beam be used as much as possible. The above applicable situations are examples only; however, it is not limited thereto.

In some embodiments, the beam used by the NCR-MT in performing measurement may possibly not be the optimal beam of the NCR-Fwd, and the method may further include: when the NCR-MT performs measurement based on the first reference signal, the NCR-Fwd is in the off state by default. The first reference signal and a reference signal associated with a TCI state or QCL assumption of a BH-link of the NCR-Fwd are not quasi-colocated, wherein the TCI state of the BH-link of the NCR-Fwd is predefined or indicated.

For example, that the TCI state of the BH-link of the NCR-Fwd is predefined includes that the TCI state is a TCI state indicated for a PDSCH/PDSCH/PUSCH/PULCH of the NCR-MT, such as a TCI state indicated for a last PDSCH/PDSCH received by the NCR-MT, or a unified TCI state indicated for the C-link, or a predetermined TCI state in multiple TCI states configured or activated for the C-link.

For example, that the TCI state of the BH-link of the NCR-Fwd is indicated includes that the NCR receives sixth indication information transmitted by the network device, the sixth indication information being used to indicate that the TCI state of the BH-link is one of multiple TCI states configured or activated for the C-link.

The above implementations of the ON/OFF state(s) of the NCR-Fwd in the random access procedure of the NCR-MT and the impact of the ON/OFF state(s) of the NCR-Fwd on the random access procedure of the NCR-MT may be implemented separately or in a combined manner, that is, for example, relevant embodiments of determining random access resources may be implemented separately, independent of 301-302, which shall not be enumerated herein any further.

In addition, the above random access procedure of the NCR-MT, other uplink and downlink transmission procedures, measurement procedures and the relationship between the ON/OFF state(s) of the NCR-Fwd may be implemented separately, or may be implemented by combining at least two of them, that is, for example, in the above measurement procedure, when the NCR-MT performs measurement based on the first reference signal, the NCR-Fwd is in the off state by default, and may be implemented separately without relying on 301-302, which shall not be enumerated herein any further.

How to control the ON/OFF state(s) of the forwarding unit when the NCR-MT is in the RRC_IDLE state or RRC_INACTIVE state shall be described below. When the NCR-MT is in the RRC_IDLE state or RRC_INACTIVE state, the NCR-Fwd may forward (whether the NCR-Fwd is in the on state needs to be determined with reference to other methods) or may not forward (equivalent to that the NCR-Fwd is in the off state).

In some embodiments, whether forwarding may be performed is default, that is, when the NCR-MT is in the RRC_IDLE state or RRC_INACTIVE state, the NCR-Fwd defaults performing forwarding (whether the NCR-Fwd is in the on state needs to be determined with reference to other methods) or defaults performing no forwarding.

In some embodiments, whether forwarding may be performed is related to a capability of the NCR and/or how the NCR-MT enters into the RRC_IDLE state or RRC_INACTIVE state and/or an indication of the network device.

In some embodiments, whether forwarding may be performed is related to the indication of the network device.

For example, the method may further include: the NCR-MT receives, second indication information transmitted by the network device, the second indication information being used to indicate the NCR-Fwd performs forwarding or does not perform forwarding when the NCR-MT is in the RRC_IDLE state or RRC_INACTIVE state, and being received when the mobile termination is in the RRC_CONNECTED and/or RRC_INACTIVE state and/or RRC_IDLE state. When the second indication information indicates that the NCR-Fwd may perform forwarding when the NCR-MT is in the RRC_IDLE state or RRC_INACTIVE state, the forwarding unit perform forwarding according to the first indication information, that is, that the NCR-Fwd is in the ON/OFF state needs to be further determined according to one or more first indication information received by the NCR-MT, wherein, (before the NCR-MT receives the first paging message (triggers the random access in 301)), the NCR-MT is in the RRC_IDLE state or RRC_INACTIVE state, and the NCR-Fwd determines that the NCR-Fwd is in the ON/OFF state according to the one or more first indication information received by the NCR-MT. The one or more first indication information is received when the NCR-MT is in the RRC_CONNECTED and/or RRC_INACTIVE state and/or RRC_IDLE state.

For example, the second indication information is a second paging message, the NCR-MT is in the RRC_IDLE state or RRC_INACTIVE state, and the NCR-MT receives the second paging message indicating ON/OFF of the NCR-Fwd. The second paging message is not limited to whether to trigger a random access procedure, that is, the second paging message triggers or does not trigger the NCR-MT to perform random access (or a state switching procedure), wherein the second paging message includes a message indicating the NCR-Fwd to stop forwarding (may not forward, off state). After the NCR-MT receives the second paging message, the NCR-Fwd does not forward and is in the off state, and optionally, the NCR-MT performs random access.

In some embodiments, whether forwarding may be performed is related to how the NCR-MT enters into the RRC_IDLE state or RRC_INACTIVE state, the network device instructs the NCR-MT to enter into the RRC_IDLE state or RRC_INACTIVE state, or the NCR-MT autonomously enters into the RRC_IDLE state or RRC_INACTIVE state.

For example, when the network device instructs the NCR-MT to enter into the RRC_IDLE state or RRC_INACTIVE state, the NCR-Fwd may perform forwarding, and it may further determine to perform forwarding or not to perform forwarding according to the first indication information or according to the first indication information and the second indication information.

For example, when the repeater autonomously enters into the RRC_IDLE state or RRC_INACTIVE state, the NCR-Fwd does not perform forwarding (by default).

For example, when a radio link or a link of the repeater fails (enters into the RRC_IDLE state), the NCR-Fwd does not perform forwarding.

In some embodiments, the repeater is in the RRC_IDLE state (before the NCR-MT receives the first paging message), and the NCR-Fwd does not perform forwarding (by default).

In some embodiments, the method may further include: NCR reports to the network device whether its NCR-Fwd may perform forwarding after the NCR-MT enters into the RRC_IDLE state or RRC_INACTIVE state.

The first indication information and the second indication information shall be described later.

In addition, how to control the ON/OFF state(s) of the forwarding unit when the NCR-MT is in the RRC_IDLE state or RRC_INACTIVE state and how to control the ON/OFF state(s) of the NCR-Fwd in the random access procedure, other uplink and downlink transmission procedures and measurement procedures of the NCR-MT may be implemented separately or by combining at least of them. That is, for example, that the forwarding unit is controlled to be in the off state when the NCR-MT is in the RRC_IDLE state or RRC_INACTIVE state may be implemented separately without relying on 301-302, which shall not be enumerated herein any further.

The embodiments of this disclosure provide an information indication method, which shall be described from a side of a repeater.

FIG. 4 is a schematic diagram of the information indication method of the embodiments of this disclosure. As shown in FIG. 4, the method includes:
401: a network device transmits indication information indicating ON/OFF of a forwarding unit of the repeater to a mobile termination of the repeater, and/or,
the network device transmits second indication information to the mobile termination of the repeater, the second indication information being used to indicate that the forwarding unit performs or does not perform forwarding when the mobile termination is in an RRC_IDLE state or RRC_INACTIVE state.

In some embodiments, the indication information includes the above first indication information and/or third indication information and/or fourth indication information and/or fifth indication information and/or second paging message. The third indication information is received before random access, the first indication information is received when the repeater is in an RRC_CONNECTED and/or RRC_INACTIVE state and/or RRC_IDLE state, the first indication information and/or the third indication information are used to indicate ON/OFF of the forwarding unit of the repeater, the fourth indication information is used to indicate ON of the forwarding unit of the repeater, and the fifth indication information is used to indicate that the forwarding unit is on or off when the mobile termination of the repeater performs random access.

In some embodiments, the above indication information may explicitly or implicitly indicate that the forwarding unit is ON/OFF, which shall be described below in detail.

In some embodiments, in order to enable the repeater to have a function of controlling ON/OFF of a forwarding unit, the repeater may receive indication information for controlling ON/OFF of the forwarding unit of the repeater, the indication information indicating whether the forwarding unit of the repeater is ON or OFF in a certain period of time (a second time-domain resource).

In some embodiments, the indication information implicitly indicates that the forwarding unit is ON/OFF.

For example, the indication information may include information for controlling access link beams and/or information indicating uplink and downlink directions, and the information for controlling access link beams (including access link beam indication information) and/or the information indicating uplink and downlink directions (also referred to as forwarding direction indication information) is/are used to implicitly indicate ON/OFF of the forwarding unit.

For example, in a first time-domain resource corresponding to a beam indicated by the information for controlling access link beams, the forwarding unit is in the on state, and for other time-domain resources, the forwarding unit is in the off state (by default), and/or in a flexible time-domain resource indicated by the information indicating uplink and downlink directions, the forwarding unit is in the off state (by default); and/or, the forwarding unit is in the off state (by default) on a time-domain resource in a first time-domain resource corresponding to the beam indicated by the information for controlling access link beams indicated by the information indicating uplink and downlink directions as a flexible time-domain resource.

When the information for controlling access link beams is used to implicitly indicate ON/OFF of the forwarding unit, the information for controlling access link beams includes first information indicating the first time-domain resource, and the first time-domain resource may also be referred to as a second time-domain resource to which the on (and/or off) state of the forwarding unit corresponds.

For example, the indication information only includes the third information used to indicate the ON/OFF state(s), and based on the third information, the second time-domain resource may be determined, or a starting position of the second time-domain resource may be determined, according to a predefined rule, and the forwarding unit is in the ON/OFF state(s) from the starting position, until new indication information is received, and executes corresponding actions according to the new indication information. For example, the third information is only used to indicate the on state (corresponding to the fourth indication information), and the second time-domain resource may be determined, or a starting position of the second time-domain resource may be determined, according to the predefined rule, and the forwarding unit is in the on state from the starting position of the second time-domain resource, until the new indication information is received, and executes corresponding actions according to the new indication information.

For another example, the indication information only includes the first information used to indicate the second time-domain resource to which ON/OFF correspond(s). For example, the indication information is only used to indicate the second time-domain resource to which the on state corresponds or is only used to indicate the second time-domain resource to which the off state corresponds. In this way, there is no need to explicitly include the third information in the indication information, and the ON/OFF state(s) may be determined according to the first information.

In some embodiments, the indication information includes the above information for controlling access link beams and the third information (optionally, it may also include the information indicating uplink and downlink directions).

For example, the third information is only used to indicate the off state, the forwarding unit is in the on state at the first time-domain resource (second time-domain resource) which corresponds to the beam indicated the information for controlling access link beams (and is not indicated as being in the off state by the third information, and is in the off state by default for other time-domain resources.

For example, the third information is only used to indicate the off state, the forwarding unit is in the on state at the first time-domain resource (second time-domain resource) which corresponds to the beam indicated the information for controlling access link beams (and is not indicated as being in the off state by the third information and/or is indicated as being flexible by the information indicating uplink and downlink directions), and is in the off state by default for other time-domain resources.

In some embodiments, the indication information is carried by at least one of second RRC signaling, second MAC signaling, or second PHY signaling.

In some embodiments, the second time-domain resource (indicated by the first information) indicated in the indication information is periodic or semi-persistent (the former two may also be referred to as being semi-static) or aperiodic (or dynamic), or, in other words, correspondingly, the time-domain resource (second time-domain resource) to which the ON/OFF state(s) correspond indicated in the indication information is periodic, semi-persistent, or aperiodic.

### I. The second time-domain resource is periodic or semi-persistent

In some embodiments, the indication information is carried by the second RRC signaling, the second RRC signaling including one or more second configuration information, the second configuration information including all information in the indication information.

In some embodiments, the indication information is carried by the second MAC signaling, the second MAC signaling including one or more second configuration information, the second configuration information including all information in the indication information.

In some embodiments, the indication information is carried by the second RRC signaling and the second MAC signaling and/or the second PHY signaling, the second RRC signaling including one or more second configuration information, the second configuration information including all or a part of information in the indication information, the second MAC signaling and/or the second PHY signaling further including identification information for indicating one or more second configurations in the multiple second configuration information and/or a part of information in the indication information.

In some embodiments, the indication information is carried by the second MAC signaling and the second PHY signaling, the second MAC signaling including one or more second configuration information, the second configuration information including all or a part of information in the indication information, and the second PHY signaling further including identification information for indicating one or more second configurations in the multiple second configuration information and/or a part of information in the indication information.

The first information includes information indicating the second time-domain resource in a period and/or period information. The second configuration information includes all or a part of information in the first information indicating the second time-domain resource, and the second MAC signaling and/or the second PHY signaling include(s) a part of information in the first information.

The part of information in the first information included in the second configuration information includes period information, and the part of information in the first information included in the second MAC signaling and/or the second PHY signaling includes information indicating the second time-domain resource in a period.

The information used to indicate the second time-domain resource in a period includes at least one third duration information and/or at least one third offset information, the third duration including a millisecond-level duration and/or a slot-level duration and/or a symbol-level duration, and the third offset including a millisecond-level offset and/or a slot-level offset and/or a symbol-level offset.

### II. The second time-domain resource is aperiodic

In some embodiments, the indication information is carried by the second PHY signaling, the second PHY signaling including one or more second information fields, at least one of which being used to indicate the second time-domain resource. The second information field includes a time-domain resource allocation information field. TDRA tables to which different time-domain resource allocation information fields correspond are identical or different, and the one or more second information fields are used to indicate at least one fourth duration information and/or at least one fourth offset information. For example, the second PHY signaling may be the above second DCI, the repeater received the second DCI, and the second DCI includes one or more indication information, wherein the first information used to indicate the second time-domain resource to which the beam corresponds is indicated by the second information field included in the second DCI; however, the embodiments of this disclosure are not limited thereto.

For example, the second DCI includes one or more TDRA information fields, one TDRA information field indicating one row of TDRA configurations, and TDRA tables to which different time-domain resource allocation information fields correspond being identical or different.

For example, the second DCI includes a TDRA information field (equivalent to the first information in the indication information), the TDRA information field being used to indicate the second time-domain resource to which the ON/OFF state(s) correspond. Assuming that the second DCI may further be used to schedule a PDSCH/PUSCH of the NCR-MT, when the second DCI is used to schedule the PDSCH/PUSCH of the NCR-MT, the TDRA field is used to indicate a fourth time-domain resource to which the PDSCH/PUSCH correspond(s). When the DCI is not used to schedule the PDSCH/PUSCH of the NCR-MT and is used to control a forwarding behavior of the forwarding unit (indicating that the forwarding unit is in the ON/OFF state(s)), the TDRA field is used to indicate the second time-domain resource to which the ON/OFF state(s) of the forwarding unit correspond. In the two cases, TDRA tables to which the TDRA information field corresponds are identical or different. That is, TDRA tables applied by the second time-domain resource and the fourth time-domain resource are identical or different.

For another example, the second DCI includes two TDRA fields. One of the TDRA fields is used to indicate the second time-domain resource to which the ON/OFF state(s) of the forwarding unit correspond, and the other indicates the fourth time-domain resource to which the PDSCH/PUSCH of the NCR-MT correspond(s). Thus, the second DCI may support simultaneously scheduling the PDSCH/PUSCH of the NCR-MT and controlling the forwarding behavior of the forwarding unit (indicating that the forwarding unit is ON/OFF).

For a further example, the second DCI includes two TDRA fields. One of the TDRA fields is used to indicate the second time-domain resource to which the ON/OFF state(s) of the forwarding unit correspond, and the other indicates the first time-domain resource to which an access link beam corresponds. In the two cases, TDRA tables to the TDRA information field corresponds are identical or different. That is, TDRA tables applied by the second time-domain resource and the first time-domain resource are identical or different.

In some embodiments, the indication information included in the second DCI only includes the third information. The third information is used to indicate that the forwarding unit is in the off state, and a priority of the off state indicated thereby is higher than a priority of an on state implicitly indicated by information on the control access link beams carried by the first RRC signaling and/or the first MAC signaling, and/or lower than a priority of an on state implicitly indicated by information on the control access link beams carried by the first DCI.

In some embodiments, the time-domain resource allocation (TDRA) table (or TDRA table in brief) includes at least one row, one row hereinafter referred to as one TDRA configuration for ease of description, i.e. the TDRA table includes at least one TDRA configuration. A TDRA configuration includes at least one time-domain resource configuration, which includes at least a symbol position (starting symbol+length) configuration in a slot; and furthermore, a TDRA configuration may include at least one slot offset K0 configuration, which is included or not included in the time-domain resource configuration. The TDRA configuration may further include other information (such as a mapping type), which is included or not included in the time-domain resource configuration, and the embodiments of this disclosure are not limited thereto. Regarding the symbol position configuration in a slot, it includes, for example, a start and length indicator SLIV, which corresponds to a valid combination of a starting symbol (S) and length (L), or, for example, it corresponds to a starting symbol configuration and length configuration, and the starting symbol configuration and length configuration are a valid combination.

In the above example, a TDRA information field (with a bit value of a configured row number) is used to indicate one TDRA configuration. The TDRA configuration is similar to the above second configuration information, and the TDRA configuration (a first information) includes at least one fourth duration information and/or at least one fourth offset information of the second time-domain resource. The fourth offset information may correspond to the above K0 configuration, and refers to an offset between the starting position of the second time-domain resource and an ending position of the PDCCH carrying the second DCI; however, the embodiments of this disclosure are not limited thereto. For example, the fourth offset may be an offset between a starting position of a second time-domain resource to which a state corresponds and an ending position of a second time-domain resource to which a state preceding the state corresponds, and the fourth duration information may correspond to the above SLIV configuration.

In some embodiments, the first indication information includes information used for indicating ON/OFF of the forwarding unit, and/or access link beam indication information, and/or backhaul link beam indication information, and/or for forwarding direction indication information.

In some embodiments, the second indication information may be carried in RRC release, and may be expressed by an existing or newly-added information field.

The embodiments of this disclosure provide an on-off control method, which shall be described from a side of a repeater (not shown).

When a mobile termination of the repeater is in an RRC_IDLE state or RRC_INACTIVE state, a forwarding unit of the repeater performs forwarding or does not perform forwarding.

In some embodiments, the forwarding unit performs forwarding according to first indication information.

In some embodiments, the first indication information includes information indicating ON/OFF of the forwarding unit, and/or access link beam indication information, and/or backhaul link beam indication information, and/or forwarding direction indication information.

In some embodiments, the first indication information is received when the mobile termination is in an RRC_CONNECTED and/or an RRC_INACTIVE state and/or an RRC_IDLE state.

In some embodiments, the mobile termination receives second indication information, the second indication information being used to indicate that the forwarding unit performs or does not perform forwarding when the mobile termination is in the RRC_IDLE state or RRC_INACTIVE state.

In some embodiments, the second indication information is received when the mobile termination is in the RRC_CONNECTED and/or the RRC_INACTIVE state and/or the RRC_IDLE state.

In some embodiments, the second indication information includes a second paging message.

The embodiments of this disclosure provide an on-off control method, which shall be described from a side of a repeater (not shown).

A mobile termination of the repeater receives a first paging message before performing a random access (or transmitting a random access preamble for the first time),
and a forwarding unit of the repeater does not perform forwarding before the mobile termination of the repeater receives the first paging message and when the repeater is in an RRC_IDLE state.

In some embodiments, the mobile termination of the repeater is indicated by a network device to enter the RRC_IDLE state or RRC_INACTIVE state or autonomously enters the RRC_IDLE state or RRC_INACTIVE state.

The embodiments of this disclosure provide an on-off control method, which shall be described from a side of a repeater (not shown).

A forwarding unit of the repeater does not perform forwarding when a mobile termination of the repeater autonomously enters into an RRC_IDLE state or RRC_INACTIVE state.

The embodiments of this disclosure provide an on-off control method, which shall be described from a side of a repeater (not shown).

A forwarding unit of the repeater does not perform forwarding when a radio link fails or a link fails of a mobile termination of the repeater.

The embodiments of this disclosure provide an on-off control method, which shall be described from a side of a repeater (not shown).

A forwarding unit of the repeater is in an off state (by default) when a mobile termination of the repeater transmits MSG. 3 and/or HARQ-ACK information of MSG. 4 and/or HARQ-ACK information of MSG. 2 (RAR), and/or when the mobile termination of the repeater receives MSG. 2 and/or MSG. 4 and/or a synchronization signal block and/or a system information block and/or a paging message and/or a first reference signal.

Implementations of the above on-off control methods are as described above, which shall not be repeated herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the embodiments of this disclosure, taking a relationship between the NCR-MT and NCR-Fwd into account, ON/OFF of the forwarding unit of the repeater are controlled, so that the time-domain resources to which the on state of the forwarding unit match with the time-domain resources of the data transmission between the network device and the terminal equipment, thereby saving power consumption of the repeater, reducing interference, and improving network throughput.

### Embodiments of a second aspect

The embodiments of this disclosure provide a repeater. The repeater may be, for example, the NCR as described above, or a network device or terminal equipment having a function of forwarding, or one or some components or assemblies configured in the NCR or the network device or the terminal equipment.

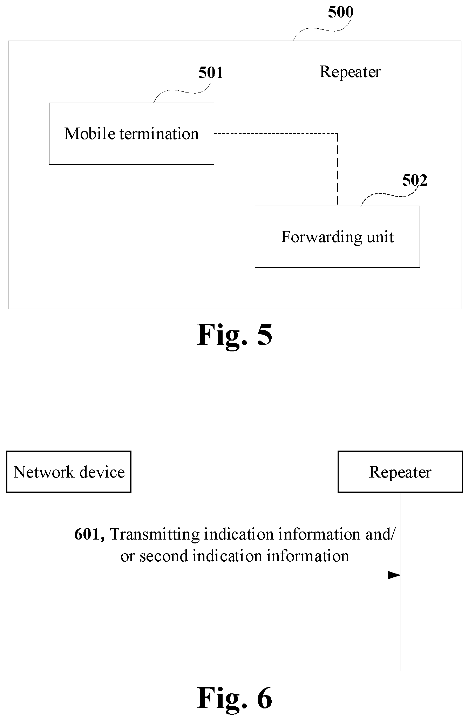

FIG. 5 is a schematic diagram of the repeater of the embodiments of this disclosure. As a principle of the repeater for solving problems is similar to that of the method in the embodiments of the first aspect, reference may be made to the implementation of the method described in the embodiments of the first aspect for implementation of the apparatus, with identical or related contents being not going to be described herein any further.

As shown in FIG. 5, a repeater 500 of the embodiments of this disclosure includes a mobile termination 501 and a forwarding unit 502. The mobile termination 501 and the forwarding unit 502 are functional entities, and functions thereof may be realized by identical or different hardware modules.

The mobile termination 501 performs random access,
and the forwarding unit 502 is in an off state when the mobile termination of the repeater transmits a random access preamble.

Reference may be made to the embodiments of the first aspect for implementations of the mobile termination 501 and the forwarding unit 502, which shall not be repeated herein any further.

In some embodiments, before performing the random access (or before transmitting the random access preamble for the first time), the mobile termination of the repeater receives a first paging message, and processing unit is further configured to make the forwarding unit of the repeater to enter into the off state after the mobile termination of the repeater receives the first paging message.

In some embodiments, the mobile termination of the repeater is in an RRC_IDLE state or RRC_INACTIVE state, and the forwarding unit performs or does not perform forwarding.

In some embodiments, the forwarding unit performs forwarding according to first indication information.

In some embodiments, the first indication information includes information indicating ON/OFF of the forwarding unit, and/or access link beam indication information, and/or backhaul link beam indication information, and/or forwarding direction indication information.

In some embodiments, the first indication information is received when the mobile termination is in an RRC_CONNECTED and/or an RRC_INACTIVE state and/or an RRC_IDLE state.

In some embodiments, the mobile termination receives second indication information, the second indication information being used to indicate that the forwarding unit performs or does not perform forwarding when the mobile termination is in the RRC_IDLE state or RRC_INACTIVE state.

In some embodiments, the second indication information is received when the mobile termination is in the RRC_CONNECTED and/or the RRC_INACTIVE state and/or the RRC_IDLE state.

In some embodiments, the second indication information includes a second paging message.

In some embodiments, the mobile termination of the repeater receives a second paging message used for indicating ON/OFF of the forwarding unit.

In some embodiments, before the mobile termination of the repeater receives the first paging message, the repeater is in the RRC_IDLE state, and the forwarding unit does not perform forwarding (by default).

In some embodiments, the mobile termination of the repeater is indicated by a network device to enter the RRC_IDLE state or RRC_INACTIVE state or autonomously enters the RRC_IDLE state or RRC_INACTIVE state.

In some embodiments, when the mobile termination of the repeater is indicated by the network device to enter the RRC_IDLE state or RRC_INACTIVE state, the forwarding unit performs or does not perform forwarding according to the first indication information and/or the second indication information.

In some embodiments, when the repeater autonomously enters the RRC_IDLE state or RRC_INACTIVE state, the forwarding unit does not perform forwarding (by default).

In some embodiments, when a radio link fails or a link fails of the repeater, the forwarding unit does not perform forwarding.

In some embodiments, when the mobile termination of the repeater transmits MSG. 3 and/or HARQ-ACK information of MSG. 4 and/or HARQ-ACK information of MSG. 2 (RAR), and/or when the mobile termination of the repeater receives MSG. 2 and/or MSG. 4 and/or a synchronization signal block and/or a system information block and/or a paging message and/or a first reference signal, the forwarding unit is in an off state (by default).

In some embodiments, for a random access resource used by the mobile termination of the repeater to transmit a random access preamble, the forwarding unit is in an off state (by default).

In some embodiments, the random access resource used by the mobile termination of the repeater to transmit the random access preamble is dedicated.

In some embodiments, the mobile termination of the repeater receives one or more third indication information before performing the random access, the one or more third indication information being used to indicate ON/OFF of the forwarding unit.

In some embodiments, time-domain resources of the forwarding unit indicated as being in an off state include a random access resource used for transmitting the random access preamble.

**In** some embodiments, time-domain resources of the forwarding unit indicated as being in an off state include a random access resource used by the mobile termination of the repeater for transmitting the random access preamble.

**In** some embodiments, the random access resource used by the mobile termination of the repeater for transmitting the random access preamble is dedicated.

**In** some embodiments, when a random access resource selected by the mobile termination of the repeater overlaps with time-domain resources of the forwarding unit predefined or indicated as being in an on state, the mobile termination of the repeater does not transmit the random access preamble on the random access resource.

**In** some embodiments, when the random access resource selected by the mobile termination of the repeater overlaps with time-domain resources of the forwarding unit predefined or indicated as being in an on state, the mobile termination of the repeater reselects a random access resource.

**In** some embodiments, not transmitting the random access preamble by the repeater is counted or not counted for one time of random access attempt.

**In** some embodiments, transmission power of the mobile termination of the repeater for transmitting the random access preamble on the reselected random access resource ramps up or does not ramp up.

In some embodiments, the mobile termination of the repeater selects the random access resource (for transmitting the random access preamble) according to an ON/OFF state(s) indicated by the one or more third indication information.

In some embodiments, the random access resource selected by the mobile termination of the repeater is within time-domain resources of the forwarding unit in the off state.

In some embodiments, the mobile termination of the repeater selects random access resource from valid random access resources, and random access resource overlapped with the time-domain resources of the forwarding unit in the off state is invalid.

In some embodiments, when the random access resource selected by the mobile termination of the repeater is within the time-domain resources when the forwarding unit is on, the mobile termination of the repeater reselects the random access resource.

In some embodiments, when the random access resource selected by the mobile termination of the repeater is within the time-domain resources when the forwarding unit is in the on state, the selected random access resource is not indicated to a physical layer of the repeater.

In some embodiments, when the mobile termination of the repeater performs random access, the forwarding unit is the off state (by default).

In some embodiments, the forwarding unit does not enter the on state (or is maintained in the off state) before the mobile termination of the repeater successfully completes the random access.

In some embodiments, the forwarding unit does not enter the on state (or is maintained in the off state) before the mobile termination of the repeater receives fourth indication information indicating that the forwarding unit is on.

In some embodiments, the mobile termination of the repeater receives fifth indication information, the fifth indication information being used to indicate that the forwarding unit is on or off when the mobile termination of the repeater performs the random access.

In some embodiments, the mobile termination of the repeater is in an RRC-IDLE state or an RRC-CONNECTED state or an RRC-INACTIVE state.

In some embodiments, the mobile termination and forwarding unit of the repeater have or do not have a capability to simultaneously transmit signals and/or simultaneously receive signals.

In some embodiments, the mobile termination of the repeater transmits capability indication information used for indicating the capability.

In some embodiments, the mobile termination and forwarding unit of the repeater have no capability to simultaneously transmit signals and/or simultaneously receive signals, and the mobile termination of the repeater transmits or does not transmit the capability indication information.

In some embodiments, the mobile termination and forwarding unit of the repeater have a capability to simultaneously transmit signals and/or simultaneously receive signals, and the mobile termination of the repeater transmits the capability indication information.

In some embodiments, the random access includes contention-based random access and/or contention-free random access.

In some embodiments, the random access is used for at least one of the following:
initial access from an RRC_IDLE state;
an RRC connection re-establishment procedure;
   DL/UL data arrival, during RRC_CONNECTED state or during the RRC_INACTIVE state (while SDT procedure is ongoing), when UL synchronization status is "non-synchronised";
   UL data arrival, during RRC_CONNECTED state or during RRC_INACTIVE state (while SDT procedure is ongoing), when there are no PUCCH resources for SR available;
   SR failure;
   synchronous reconfiguration (e.g. handover) triggered/requested by RRC;
   RRC connection resume procedure from RRC_INACTIVE state;
   request for other SIs;
   beam failure recovery;
   consistent UL LBT failures on an SpCell;
   SDT in RRC_INACTIVE state; and
   positioning during RRC_CONNECTED state (e.g. when TA is needed for positioning).

The embodiments of this disclosure further provide a repeater, wherein a forwarding unit 502 of the repeater performs or does not perform forwarding when a mobile termination 501 of the repeater is in an RRC_IDLE state or an RRC_INACTIVE state.

In some embodiments, the forwarding unit performs forwarding according to first indication information.

In some embodiments, the first indication information includes information indicating ON/OFF of the forwarding unit, and/or access link beam indication information, and/or backhaul link beam indication information, and/or forwarding direction indication information.

In some embodiments, the first indication information is received when the mobile termination is in an RRC_CONNECTED and/or an RRC_INACTIVE state and/or an RRC_IDLE state.

In some embodiments, the mobile termination receives second indication information, the second indication information being used to indicate that the forwarding unit performs or does not perform forwarding when the mobile termination is in the RRC_IDLE state or RRC_INACTIVE state.

In some embodiments, the second indication information is received when the mobile termination is in the RRC_CONNECTED and/or the RRC_INACTIVE state and/or the RRC_IDLE state.

In some embodiments, the second indication information includes a second paging message.

The embodiments of this disclosure further provide a repeater, wherein a mobile termination 501 of the repeater receives a first paging message before performing a random access (or transmitting a random access preamble for the first time),
and a forwarding unit 502 of the repeater does not perform forwarding before the mobile termination 501 of the repeater receives the first paging message and when the repeater is in the RRC_IDLE state.

In some embodiments, the mobile termination of the repeater is indicated by a network device to enter the RRC_IDLE state or RRC_INACTIVE state or autonomously enters the RRC_IDLE state or RRC_INACTIVE state.

The embodiments of this disclosure further provide a repeater, wherein a forwarding unit 502 of the repeater does not perform forwarding when a mobile termination 501 of the repeater autonomously enters an RRC_IDLE state or RRC_INACTIVE state.

The embodiments of this disclosure further provide a repeater, wherein a forwarding unit 502 of the repeater does not perform forwarding when a radio link or a link of a mobile termination 501 of the repeater fails.

The embodiments of this disclosure further provide a repeater, wherein a forwarding unit 502 of the repeater is in an off state (by default) when a mobile termination 501 of the repeater transmits MSG. 3 and/or HARQ-ACK information of MSG. 4 and/or HARQ-ACK information of MSG. 2 (RAR), and/or when the mobile termination of the repeater receives MSG. 2 and/or MSG. 4 and/or a synchronization signal block and/or a system information block and/or a paging message and/or a first reference signal.

The embodiments of this disclosure further provide a repeater, wherein a mobile termination 501 of the repeater receives indication information indicating ON/OFF of a forwarding unit of the repeater, and/or,
the mobile termination 501 of the repeater receives second indication information, the second indication information being used to indicate that the forwarding unit performs or does not perform forwarding when the mobile termination is in an RRC_IDLE state or RRC_INACTIVE state.

In some embodiments, the indication information includes first indication information and/or third indication information and/or fourth indication information and/or fifth indication information and/or a second paging message.

Furthermore, for the sake of simplicity, connection relationships between the components or modules or signal profiles thereof are only illustrated in FIG. 5. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the embodiments of this disclosure, taking a relationship between the NCR-MT and NCR-Fwd into account, ON/OFF of the forwarding unit of the repeater are controlled, so that the time-domain resources to which the on state of the forwarding unit match with the time-domain resources of the data transmission between the network device and the terminal equipment, thereby saving power consumption of the repeater, reducing interference, and improving network throughput.

### Embodiments of a third aspect

The embodiments of this disclosure provide an information indication method, which shall be described from a side of a network device, and contents identical to those in the embodiments of the first aspect shall not be repeated herein any further.

FIG. 6 is a schematic diagram of the information indication method of the embodiments of this disclosure. As shown in FIG. 6, the method includes:
601: a network device transmits indication information indicating ON/OFF of a forwarding unit of a repeater to a mobile termination of the repeater, and/or,
transmits second indication information to the mobile termination of the repeater, the second indication information being used to indicate that the forwarding unit performs or does not perform forwarding when the mobile termination is in an RRC_IDLE state or RRC_INACTIVE state.

Reference may be made to the embodiments of the first aspect for implementations of the indication information in 601, which shall not be repeated herein any further.

It should be noted that FIG. 6 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 6.

The steps or processes related to this disclosure are only described above; however, this disclosure is not limited thereto. The method of the embodiments of this disclosure may also include other steps or processes, and reference may be made to relevant techniques for specific contents of these steps or processes.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the embodiments of this disclosure, taking a relationship between the NCR-MT and NCR-Fwd into account, ON/OFF of the forwarding unit of the repeater are controlled, so that the time-domain resources to which the on state of the forwarding unit match with the time-domain resources of the data transmission between the network device and the terminal equipment, thereby saving power consumption of the repeater, reducing interference, and improving network throughput.

### Embodiments of a fourth aspect

The embodiments of this disclosure provide a network device.

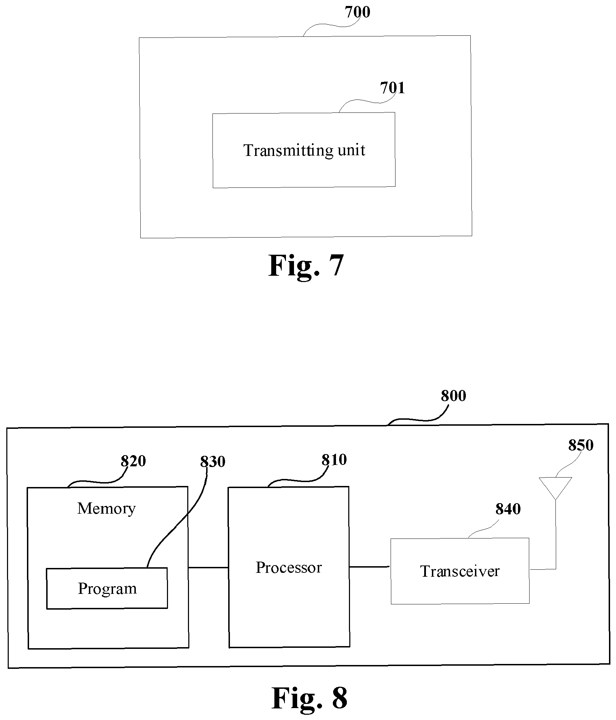

FIG. 7 is a schematic diagram of the network device of the embodiments of this disclosure. As a principle of the network device for solving problems is similar to that of the method in the embodiments of the third aspect, reference may be made to the implementation of the method described in the embodiments of the third aspect for implementation of the network device, with identical or related contents being not going to be described herein any further.

As shown in FIG. 7, a network device 700 of the embodiments of this disclosure includes:
a transmitting unit 701 configured to transmit indication information indicating ON/OFF of a forwarding unit of a repeater to a mobile termination of the repeater, and/or,
transmit second indication information to the mobile termination of the repeater, the second indication information being used to indicate that the forwarding unit performs or does not perform forwarding when the mobile termination is in an RRC_IDLE state or RRC_INACTIVE state.

Reference may be made to the embodiments of the third aspect for implementation of the transmitting unit 701, which shall not be described herein any further.

It should be noted that the components or modules related to this disclosure are only described above. However, this disclosure is not limited thereto, and the network device 700 of the embodiments of this disclosure may further include other components or modules, and reference may be made to related techniques for particulars of these components or modules.

Furthermore, for the sake of simplicity, connection relationships between the components or modules or signal profiles thereof are only illustrated in FIG. 7. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the embodiments of this disclosure, taking a relationship between the NCR-MT and NCR-Fwd into account, ON/OFF of the forwarding unit of the repeater are controlled, so that the time-domain resources to which the on state of the forwarding unit match with the time-domain resources of the data transmission between the network device and the terminal equipment, thereby saving power consumption of the repeater, reducing interference, and improving network throughput.

### Embodiments of a fifth aspect

The embodiments of this disclosure provide a communication system. FIG. 1 is a schematic diagram of the communication system of the embodiments of this disclosure. As shown in FIG. 1, a communication system 100 includes a network device 101, a repeater 102 and a terminal equipment 103. For the sake of simplicity, description is given in FIG. 1 by taking one first device, one repeater and one terminal equipment only as an example; however, the embodiments of this disclosure are not limited thereto.

In the embodiments of this disclosure, existing traffics or traffics that may be implemented in the future may be performed between the network device 101 and the terminal equipment 103. For example, such traffics may include but not limited to enhanced mobile broadband (eMBB), massive machine type communication (mMTC), ultra-reliable and low-latency communication (URLLC), and vehicle to everything (V2X) communication, etc. The repeater 102 is configured to execute the information indication method or the on-off control method in the embodiments of the first aspect, and the network device 101 is configured to execute the information indication method in the embodiments of the third aspect, contents of which being incorporated herein, which shall not be repeated herein any further.

The embodiments of this disclosure further provide an electronic device, which may be, for example, a repeater or a network device.

FIG. 8 is a schematic diagram of a structure of the electronic device of the embodiments of this disclosure. As shown in FIG. 8, an electronic device 800 may include a processor 810 (such as a central processing unit (CPU)) and a memory 820, the memory 820 being coupled to the processor 810. The memory 820 may store various data, and furthermore, it may store a program 830 for information processing, and execute the program 830 under control of the processor 810.

For example, the processor 810 may be configured to execute a program to execute the information indication method or the on-off control method described in the embodiments of the first aspect.

For another example, the processor 810 may be configured to execute a program to execute the information indication method described in the embodiments of the third aspect.

Furthermore, as shown in FIG. 8, the electronic device 800 may include a transceiver 840, and an antenna 850, etc. Functions of the above components are similar to those in the related art, and shall not be described herein any further. It should be noted that the electronic device 800 does not necessarily include all the parts shown in FIG. 8, and furthermore, the electronic device 800 may include parts not shown in FIG. 8, and the related art may be referred to.

Embodiments of this disclosure provide a computer readable program, when executed in a repeater, causes a computer to carry out the information indication method or the on-off control method described in the embodiments of the first aspect in the repeater.

Embodiments of this disclosure provide a computer storage medium, including a computer readable program, which causes a computer to carry out the information indication method as described in the embodiments of the first aspect in a repeater.

Embodiments of this disclosure provide a computer readable program, when executed in a network device, causes a computer to carry out the information indication method or the on-off control method described in the embodiments of the first aspect in the network device.

Embodiments of this disclosure provide a computer storage medium, including a computer readable program, which causes a computer to carry out the information indication method as described in the embodiments of the third aspect in in a network device.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile termination, and may also be stored in a memory card of a pluggable mobile termination. For example, if equipment (such as a mobile termination) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

As to implementations containing the above embodiments, following supplements are further disclosed.
1. An on-off control method, applicable to a repeater, characterized in that the method includes:
   performing random access by a mobile termination of the repeater; and
   being in an off state by a forwarding unit of the repeater when the mobile termination of the repeater transmits a random access preamble.
2. The method according to supplement 1, wherein the method further includes:
   before performing the random access (or before transmitting the random access preamble for the first time), receiving a first paging message by the mobile termination of the repeater, and entering into the off state by the forwarding unit after the mobile termination of the repeater receives the first paging message.
3. The method according to supplement 1 or 2, wherein the mobile termination of the repeater is in an RRC_IDLE state or RRC_INACTIVE state, and the forwarding unit performs or does not perform forwarding.
3a. The method according to supplement 3, wherein the forwarding unit performs forwarding according to first indication information.
3b. The method according to supplement 3a, wherein the first indication information includes information indicating ON/OFF of the forwarding unit, and/or access link beam indication information, and/or backhaul link beam indication information, and/or forwarding direction indication information.
4. The method according to supplement 3a, wherein the first indication information is received when the mobile termination is in an RRC_CONNECTED and/or an RRC_INACTIVE state and/or an RRC_IDLE state.
5. The method according to supplement 1 or 3, wherein the method further includes:
   receiving second indication information by the mobile termination, the second indication information being used to indicate that the forwarding unit performs or does not perform forwarding when the mobile termination is in the RRC_IDLE state or RRC_INACTIVE state.
5a. The method according to supplement 5, wherein the second indication information is received when the mobile termination is in the RRC_CONNECTED and/or the RRC_INACTIVE state and/or the RRC_IDLE state.
5b. The method according to supplement 5a, wherein the second indication information includes a second paging message.
6. The method according to supplement 3 or 5a, wherein the method further includes:
   receiving a second paging message used for indicating ON/OFF of the forwarding unit by the mobile termination of the repeater.
7. The method according to supplement 2, wherein before the mobile termination of the repeater receives the first paging message, the repeater is in the RRC_IDLE state, and the forwarding unit does not perform forwarding (by default).
8. The method according to any one of supplements 2-7, wherein the mobile termination of the repeater is indicated by a network device to enter the RRC_IDLE state or RRC_INACTIVE state or autonomously enters the RRC_IDLE state or RRC_INACTIVE state.
9. The method according to supplement 8, wherein when the mobile termination of the repeater is indicated by the network device to enter the RRC_IDLE state or RRC_INACTIVE state, the forwarding unit performs or does not perform forwarding according to the first indication information and/or the second indication information.
10. The method according to supplement 9, wherein when the repeater autonomously enters the RRC_IDLE state or RRC_INACTIVE state, the forwarding unit does not perform forwarding (by default).
11. The method according to supplement 1 or 10, wherein when a radio link fails or a link fails of the repeater, the forwarding unit does not perform forwarding.
12. The method according to supplement 1, wherein when the mobile termination of the repeater transmits MSG. 3 and/or HARQ-ACK information of MSG. 4 and/or HARQ-ACK information of MSG. 2 (RAR), and/or when the mobile termination of the repeater receives MSG. 2 and/or MSG. 4 and/or a synchronization signal block and/or a system information block and/or a paging message and/or a first reference signal, the forwarding unit is in an off state (by default).
13. The method according to supplement 1, wherein for a random access resource used by the mobile termination of the repeater to transmit a random access preamble, the forwarding unit is in an off state (by default).
14. The method according to supplement 13, wherein the random access resource used by the mobile termination of the repeater to transmit the random access preamble is dedicated.
15. The method according to supplement 1, wherein the mobile termination of the repeater receives one or more third indication information before performing the random access, the one or more third indication information being used to indicate ON/OFF of the forwarding unit.
16. The method according to supplement 15, wherein time-domain resources of the forwarding unit indicated as being in an off state include a random access resource used for transmitting the random access preamble.
17. The method according to supplement 15, wherein time-domain resources of the forwarding unit indicated as being in an off state include a random access resource used by the mobile termination of the repeater for transmitting the random access preamble.
18. The method according to supplement 17, wherein a random access resource used by the mobile termination of the repeater for transmitting the random access preamble is dedicated.
19. The method according to supplement 1, wherein when a random access resource selected by the mobile termination of the repeater overlaps with time-domain resources of the forwarding unit predefined or indicated as being in an on state, the mobile termination of the repeater does not transmit the random access preamble on the random access resource.
20. The method according to supplement 1 or 19, wherein when the random access resource selected by the mobile termination of the repeater overlaps with time-domain resources of the forwarding unit predefined or indicated as being in an on state, the mobile termination of the repeater reselects a random access resource.
21. The method according to supplement 19 or 20, wherein not transmitting the random access preamble by the repeater is counted or not counted for one time of random access attempt.
22. The method according to supplement 19 or 20, wherein transmission power of the mobile termination of the repeater for transmitting the random access preamble on the reselected random access resources ramps up or does not ramp up.
23. The method according to supplement 15, wherein the mobile termination of the repeater selects the random access resource (for transmitting the random access preamble) according to an ON/OFF state(s) indicated by the one or more third indication information.
24. The method according to supplement 23, wherein the random access resource selected by the mobile termination of the repeater is within time-domain resources of the forwarding unit in the off state.
25. The method according to supplement 23 or 24, wherein the mobile termination of the repeater selects the random access resource from valid random access resources, and the random access resource overlapped with the time-domain resources of the forwarding unit in the off state is invalid.
26. The method according to supplement 23 or 24, wherein when the random access resource selected by the mobile termination of the repeater is within the time-domain resources when the forwarding unit is on, the mobile termination of the repeater reselects random access resource.
27. The method according to supplement 26, wherein when the random access resource selected by the mobile termination of the repeater is within the time-domain resources when the forwarding unit is in the on state, the selected random access resource is not indicated to a physical layer of the repeater.
28. The method according to supplement 1, wherein when the mobile termination of the repeater performs random access, the forwarding unit is the off state (by default).
29. The method according to supplement 1, wherein the forwarding unit does not enter the on state (or is maintained in the off state) before the mobile termination of the repeater successfully completes the random access.
30. The method according to supplement 1, wherein the forwarding unit does not enter the on state (or is maintained in the off state) before the mobile termination of the repeater receives fourth indication information indicating that the forwarding unit is on.
31. The method according to supplement 1, wherein the method further includes:
   receiving fifth indication information by the mobile termination of the repeater, the fifth indication information being used to indicate that the forwarding unit is on or off when the mobile termination of the repeater performs the random access.
32. The method according to supplement 1, wherein the mobile termination of the repeater is in an RRC-IDLE state or an RRC-CONNECTED state or an RRC-INACTIVE state.
33. The method according to supplement 1, wherein the mobile termination and forwarding unit of the repeater have or do not have a capability to simultaneously transmit signals and/or simultaneously receive signals.
34. The method according to supplement 33, wherein the mobile termination of the repeater transmits capability indication information used for indicating the capability.
35. The method according to supplement 34, wherein the mobile termination and forwarding unit of the repeater have no capability to simultaneously transmit signals and/or simultaneously receive signals, and the mobile termination of the repeater transmits or does not transmit the capability indication information.
36. The method according to supplement 34 or 35, wherein the mobile termination and forwarding unit of the repeater have a capability to simultaneously transmit signals and/or simultaneously receive signals, and the mobile termination of the repeater transmits the capability indication information.
37. The method according to supplement 1, wherein the random access includes contention-based random access and/or contention-free random access.
38. The method according to supplement 1, wherein the random access is used for at least one of the following:
   initial access from an RRC_IDLE state;
   an RRC connection re-establishment procedure;
      DL/UL data arrival, during RRC_CONNECTED state or during the RRC_INACTIVE state (while SDT procedure is ongoing), when UL synchronization status is "non-synchronised";
      UL data arrival, during RRC_CONNECTED state or during RRC_INACTIVE state (while SDT procedure is ongoing), when there are no PUCCH resources for SR available;
      SR failure;
      synchronous reconfiguration (e.g. handover) triggered/requested by RRC;
      RRC connection resume procedure from RRC_INACTIVE state;
      request for other SIs;
      beam failure recovery;
      consistent UL LBT failures on an SpCell;
      SDT in RRC_INACTIVE state; and
      positioning during RRC_CONNECTED state (e.g. when TA is needed for positioning).
39. An on-off control method, applicable to a repeater, characterized in that the method includes:
   when a mobile termination of the repeater is in an RRC_IDLE state or RRC _INACTIVE state, performing forwarding or not performing forwarding by a forwarding unit of the repeater.
39a. The method according to supplement 39, wherein the forwarding unit performs forwarding according to first indication information.
39b. The method according to supplement 39a, wherein the first indication information includes information indicating ON/OFF of the forwarding unit, and/or access link beam indication information, and/or backhaul link beam indication information, and/or forwarding direction indication information.
40. The method according to supplement 39, wherein the first indication information is received when the mobile termination is in an RRC_CONNECTED and/or an RRC_INACTIVE state and/or an RRC_IDLE state.
41. The method according to supplement 39, wherein the method further includes:
   receiving second indication information by the mobile termination, the second indication information being used to indicate that the forwarding unit performs or does not perform forwarding when the mobile termination is in the RRC_IDLE state or RRC _INACTIVE state.
41a. The method according to supplement 41, wherein the second indication information is received when the mobile termination is in the RRC_CONNECTED and/or the RRC _INACTIVE state and/or the RRC_IDLE state.
41b. The method according to supplement 40, wherein the second indication information includes a second paging message.
42. A on-off control method, applicable to a repeater, characterized in that the method includes:
   receiving a first paging message by a mobile termination of the repeater before performing a random access (or transmitting a random access preamble for the first time); and
   not performing forwarding by a forwarding unit of the repeater before the mobile termination of the repeater receives the first paging message and the repeater is in an RRC_IDLE state.
43. The method according to any one of supplements 39-42, wherein the mobile termination of the repeater is indicated by a network device to enter the RRC_IDLE state or RRC _INACTIVE state or autonomously enters the RRC_IDLE state or RRC _INACTIVE state.
44. An on-off control method, applicable to a repeater, characterized in that the method includes:
   not performing forwarding by a forwarding unit of the repeater when a mobile termination of the repeater autonomously enters into an RRC_IDLE state or RRC _INACTIVE state.
45. An on-off control method, applicable to a repeater, characterized in that the method includes:
   not performing forwarding by a forwarding unit of the repeater when a radio link fails or a link fails of a mobile termination of the repeater.
46. An on-off control method, applicable to a repeater, characterized in that the method includes:
   a forwarding unit of the repeater being in an off state (by default) when a mobile termination of the repeater transmits MSG. 3 and/or HARQ-ACK information of MSG. 4 and/or HARQ-ACK information of MSG. 2 (RAR), and/or when the mobile termination of the repeater receives MSG. 2 and/or MSG. 4 and/or a synchronization signal block and/or a system information block and/or a paging message and/or a first reference signal.
47. An information indication method, applicable to a repeater, characterized in that the method includes:
   receiving indication information indicating ON/OFF of a forwarding unit of the repeater by a mobile termination of the repeater, and/or,
   receiving second indication information by the mobile termination of the repeater, the second indication information being used to indicate that the forwarding unit performs or does not perform forwarding when the mobile termination is in an RRC_IDLE state or RRC _INACTIVE state.
47a. The method according to supplement 47, wherein the indication information includes first indication information and/or third indication information and/or fourth indication information and/or fifth indication information and/or a second paging message.
48. An information indication method, applicable to a network device, characterized in that the method includes:
   transmitting indication information indicating ON/OFF of a forwarding unit of a repeater to a mobile termination of the repeater, and/or,
   transmitting second indication information to the mobile termination of the repeater, the second indication information being used to indicate that the forwarding unit performs or does not perform forwarding when the mobile termination is in an RRC_IDLE state or RRC _INACTIVE state.
48a. The method according to supplement 48, wherein the indication information includes first indication information and/or third indication information and/or fourth indication information and/or fifth indication information and/or a second paging message.
49. A repeater, including a memory and a processor, the memory storing a computer program, and the processor being configured to execute the computer program to carry out the information indication method or the on-off control method as described in any one of supplements 1-47.
50. A network device, including a memory and a processor, the memory storing a computer program, and the processor being configured to execute the information indication method as described in supplement 48.

The embodiments of this disclosure further disclose the following supplements.
1. A repeater, characterized in that the repeater includes:
   a mobile termination configured to perform random access; and
   a forwarding unit which is in an off state when the mobile termination of the repeater transmits a random access preamble.
2. The repeater according to supplement 1, wherein the mobile termination of the repeater receives a first paging message before performing the random access (or before transmitting the random access preamble for the first time), and a processing unit is further configured to make the forwarding unit enter the off state after the mobile termination of the repeater receives the first paging message.
3. The repeater according to supplement 1 or 2, wherein the mobile termination of the repeater is in an RRC_IDLE state or RRC _INACTIVE state, and the forwarding unit performs or does not perform forwarding.
3a. The repeater according to supplement 3, wherein the forwarding unit performs forwarding according to first indication information.
3b. The repeater according to supplement 3a, wherein the first indication information includes information indicating ON/OFF of the forwarding unit, and/or access link beam indication information, and/or backhaul link beam indication information, and/or forwarding direction indication information.
4. The repeater according to supplement 3a, wherein the first indication information is received when the mobile termination is in an RRC_CONNECTED and/or an RRC _INACTIVE state and/or an RRC_IDLE state.
5. The repeater according to supplement 1 or 3, wherein the mobile termination receives second indication information, the second indication information being used to indicate that the forwarding unit performs or does not perform forwarding when the mobile termination is in the RRC_IDLE state or RRC _INACTIVE state.
5a. The repeater according to supplement 5, wherein the second indication information is received when the mobile termination is in the RRC_CONNECTED and/or the RRC _INACTIVE state and/or the RRC_IDLE state.
5b. The repeater according to supplement 5a, wherein the second indication information includes a second paging message.
6. The repeater according to supplement 3 or 5a, wherein the mobile termination of the repeater receives a second paging message used for indicating ON/OFF of the forwarding unit.
7. The repeater according to supplement 2, wherein before the mobile termination of the repeater receives the first paging message, the repeater is in the RRC_IDLE state, and the forwarding unit does not perform forwarding (by default).
8. The repeater according to any one of supplements 2-7, wherein the mobile termination of the repeater is indicated by a network device to enter the RRC_IDLE state or RRC_INACTIVE state or autonomously enters the RRC_IDLE state or RRC_INACTIVE state.
9. The repeater according to supplement 8, wherein when the mobile termination of the repeater is indicated by the network device to enter the RRC_IDLE state or RRC _INACTIVE state, the forwarding unit performs or does not perform forwarding according to the first indication information and/or the second indication information.
10. The repeater according to supplement 9, wherein when the repeater autonomously enters the RRC_IDLE state or RRC _INACTIVE state, the forwarding unit does not perform forwarding (by default).
11. The repeater according to supplement 1 or 10, wherein when a radio link fails or a link fails of the repeater, the forwarding unit does not perform forwarding.
12. The repeater according to supplement 1, wherein when the mobile termination of the repeater transmits MSG. 3 and/or HARQ-ACK information of MSG. 4 and/or HARQ-ACK information of MSG. 2 (RAR), and/or when the mobile termination of the repeater receives MSG. 2 and/or MSG. 4 and/or a synchronization signal block and/or a system information block and/or a paging message and/or a first reference signal, the forwarding unit is in an off state (by default).
13. The repeater according to supplement 1, for a random access resource used by the mobile termination of the repeater to transmit a random access preamble, the forwarding unit is in an off state (by default).
14. The repeater according to supplement 13, wherein the random access resource used by the mobile termination of the repeater to transmit the random access preamble is dedicated.
15. The repeater according to supplement 1, wherein the mobile termination of the repeater receives one or more third indication information before performing the random access, the one or more third indication information being used to indicate ON/OFF of the forwarding unit.
16. The repeater according to supplement 15, wherein time-domain resources of the forwarding unit indicated as being in an off state include a random access resource used for transmitting the random access preamble.
17. The repeater according to supplement 15, wherein time-domain resources of the forwarding unit indicated as being in an off state include a random access resource used by the mobile termination of the repeater for transmitting the random access preamble.
18. The repeater according to supplement 17, wherein a random access resource used by the mobile termination of the repeater for transmitting the random access preamble is dedicated.
19. The repeater according to supplement 1, wherein when a random access resource selected by the mobile termination of the repeater overlaps with time-domain resources of the forwarding unit predefined or indicated as being in an on state, the mobile termination of the repeater does not transmit the random access preamble on the random access resource.
20. The repeater according to supplement 1 or 19, wherein when the random access resource selected by the mobile termination of the repeater overlaps with time-domain resources of the forwarding unit predefined or indicated as being in an on state, the mobile termination of the repeater reselects a random access resource.
21. The repeater according to supplement 19 or 20, not transmitting the random access preamble by the repeater is counted or not counted for one time of random access attempt.
22. The repeater according to supplement 19 or 20, wherein transmit power of the mobile termination of the repeater for transmitting the random access preamble on the reselected random access resource ramps up or does not ramp up.
23. The repeater according to supplement 15, wherein the mobile termination of the repeater selects the random access resource (for transmitting the random access preamble) according to an ON/OFF state(s) indicated by the one or more third indication information.
24. The repeater according to supplement 23, where the random access resource selected by the mobile termination of the repeater is within time-domain resources of the forwarding unit in the off state.
25. The repeater according to supplement 23 or 24, wherein the mobile termination of the repeater selects the random access resource from valid random access resources, and the random access resource overlapped with the time-domain resources of the forwarding unit in the off state is invalid.
26. The repeater according to supplement 23 or 24, wherein when the random access resource selected by the mobile termination of the repeater is within the time-domain resources when the forwarding unit is on, the mobile termination of the repeater reselects random access resources.
27. The repeater according to supplement 26, wherein when the random access resource selected by the mobile termination of the repeater is within the time-domain resources when the forwarding unit is in the on state, the selected random access resource is not indicated to a physical layer of the repeater.
28. The repeater according to supplement 1, wherein when the mobile termination of the repeater performs random access, the forwarding unit is the off state (by default).
29. The repeater according to supplement 1, wherein the forwarding unit does not enter the on state (or is maintained in the off state) before the mobile termination of the repeater successfully completes the random access.
30. The repeater according to supplement 1, wherein the forwarding unit does not enter the on state (or is maintained in the off state) before the mobile termination of the repeater receives fourth indication information indicating that the forwarding unit is on.
31. The repeater according to supplement 1, wherein the mobile termination of the repeater receives fifth indication information, the fifth indication information being used to indicate that the forwarding unit is on or off when the mobile termination of the repeater performs the random access.
32. The repeater according to supplement 1, wherein the mobile termination of the repeater is in an RRC-IDLE state or an RRC-CONNECTED state or an RRC-INACTIVE state.
33. The repeater according to supplement 1, wherein the mobile termination and forwarding unit of the repeater have or do not have a capability to simultaneously transmit signals and/or simultaneously receive signals.
34. The repeater according to supplement 33, wherein the mobile termination of the repeater transmits capability indication information used for indicating the capability.
35. The repeater according to supplement 34, wherein the mobile termination and forwarding unit of the repeater have no capability to simultaneously transmit signals and/or simultaneously receive signals, and the mobile termination of the repeater transmits or does not transmit the capability indication information.
36. The repeater according to supplement 34 or 35, wherein the mobile termination and forwarding unit of the repeater have a capability to simultaneously transmit signals and/or simultaneously receive signals, and the mobile termination of the repeater transmits the capability indication information.
37. The repeater according to supplement 1, wherein the random access includes contention-based random access and/or contention-free random access.
38. The repeater according to supplement 1, wherein the random access is used for at least one of the following:
   initial access from an RRC_IDLE state;
   an RRC connection re-establishment procedure;
      DL/UL data arrival, during RRC_CONNECTED state or during the RRC_INACTIVE state (while SDT procedure is ongoing), when UL synchronization status is "non-synchronised";
      UL data arrival, during RRC_CONNECTED state or during RRC _INACTIVE state (while SDT procedure is ongoing), when there are no PUCCH resources for SR available;
      SR failure;
      synchronous reconfiguration (e.g. handover) triggered/requested by RRC;
      RRC connection resume procedure from RRC _INACTIVE state;
      request for other SIs;
      beam failure recovery;
      consistent UL LBT failures on an SpCell;
      SDT in RRC_INACTIVE state; and
      positioning during RRC_CONNECTED state (e.g. when TA is needed for positioning).
39. A repeater, characterized in that the repeater includes a mobile termination and a forwarding unit,
   the forwarding unit of the repeater performing or not performing forwarding when the mobile termination of the repeater is in an RRC_IDLE state or an RRC_ INACTIVE state.
39a. The repeater according to supplement 39, wherein the forwarding unit performs forwarding according to first indication information.
39b. The repeater according to supplement 39a, wherein the first indication information includes information indicating ON/OFF of the forwarding unit, and/or access link beam indication information, and/or backhaul link beam indication information, and/or forwarding direction indication information.
40. The repeater according to supplement 39, wherein the first indication information is received when the mobile termination is in an RRC_CONNECTED and/or an RRC_INACTIVE state and/or an RRC_IDLE state.
41. The repeater according to supplement 39, wherein the mobile termination receives second indication information, the second indication information being used to indicate that the forwarding unit performs or does not perform forwarding when the mobile termination is in the RRC_IDLE state or RRC _INACTIVE state.
41a. The repeater according to supplement 41, wherein the second indication information is received when the mobile termination is in the RRC_CONNECTED and/or the RRC _INACTIVE state and/or the RRC_IDLE state.
41b. The repeater according to supplement 40, wherein the second indication information includes a second paging message.
42. A repeater, characterized in that the repeater includes a mobile termination and a forwarding unit,
   the mobile termination of the repeater receiving a first paging message before performing a random access (or transmitting a random access preamble for the first time),
   and the forwarding unit of the repeater not performing forwarding before the mobile termination of the repeater receives the first paging message and the repeater is in the RRC_IDLE state.
43. The repeater according to any one of supplements 39-42, wherein the mobile termination of the repeater is indicated by a network device to enter the RRC_IDLE state or RRC _INACTIVE state or autonomously enters the RRC_IDLE state or RRC _INACTIVE state.
44. A repeater, characterized in that the repeater includes a mobile termination and a forwarding unit,
   the forwarding unit of the repeater not performing forwarding when the mobile termination of the repeater autonomously enters an RRC_IDLE state or RRC _INACTIVE state.
45. A repeater, characterized in that the repeater includes a mobile termination and a forwarding unit,
   the forwarding unit of the repeater not performing forwarding when a radio link fails or a link fails of the repeater.
46. A repeater, characterized in that the repeater includes a mobile termination and a forwarding unit,
   the forwarding unit being in an off state (by default) when the mobile termination of the repeater transmits MSG. 3 and/or HARQ-ACK information of MSG. 4 and/or HARQ-ACK information of MSG. 2 (RAR), and/or when the mobile termination of the repeater receives MSG. 2 and/or MSG. 4 and/or a synchronization signal block and/or a system information block and/or a paging message and/or a first reference signal.
47. A repeater, characterized in that the repeater includes a mobile termination and a forwarding unit,
   the mobile termination of the repeater receiving indication information indicating ON/OFF of the forwarding unit of the repeater, and/or,
   the mobile termination of the repeater receiving second indication information, the second indication information being used to indicate that the forwarding unit performs or does not perform forwarding when the mobile termination is in an RRC_IDLE state or RRC _INACTIVE state.
47a. The repeater according to supplement 47, wherein the indication information includes first indication information and/or third indication information and/or fourth indication information and/or fifth indication information and/or a second paging message.
48. A network device, characterized in that the network device includes:
   a transmitting unit configured to transmit indication information indicating ON/OFF of a forwarding unit of a repeater to a mobile termination of the repeater, and/or,
   transmit second indication information to the mobile termination of the repeater, the second indication information being used to indicate that the forwarding unit performs or does not perform forwarding when the mobile termination is in an RRC_IDLE state or RRC _INACTIVE state.
48a. The network device according to supplement 48, wherein the indication information includes first indication information and/or third indication information and/or fourth indication information and/or fifth indication information and/or a second paging message.

## Claims

1. A repeater, **characterized in that** the repeater comprises:
a mobile termination configured to perform random access; and
a forwarding unit which is in an off state when the mobile termination of the repeater transmits a random access preamble.

2. The repeater according to claim 1, wherein when the mobile termination of the repeater transmits MSG. 3 and/or HARQ-ACK information of MSG. 4 and/or HARQ-ACK information of MSG. 2 (RAR), and/or when the mobile termination of the repeater receives MSG. 2 and/or MSG. 4 and/or a synchronization signal block and/or a system information block and/or a paging message and/or a first reference signal, the forwarding unit is in an off state (by default).

3. The repeater according to claim 1, wherein for a random access resource used by the mobile termination of the repeater to transmit a random access preamble, the forwarding unit is in an off state (by default).

4. The repeater according to claim 3, wherein the random access resource used by the mobile termination of the repeater to transmit the random access preamble is dedicated.

5. The repeater according to claim 1, wherein the mobile termination of the repeater receives one or more third indication information before performing the random access, the one or more third indication information being used to indicate ON/OFF of the forwarding unit.

6. The repeater according to claim 5, wherein time-domain resources of the forwarding unit indicated as being in an off state comprise a random access resource used for transmitting the random access preamble.

7. The repeater according to claim 5, wherein time-domain resources of the forwarding unit indicated as being in an off state comprise a random access resource used by the mobile termination of the repeater for transmitting the random access preamble.

8. The repeater according to claim 7, the random access resource used by the mobile termination of the repeater for transmitting the random access preamble is dedicated.

9. The repeater according to claim 1, wherein when a random access resource selected by the mobile termination of the repeater overlaps with time-domain resources of the forwarding unit predefined or indicated as being in an on state, the mobile termination of the repeater does not transmit the random access preamble at the random access resource.

10. The repeater according to claim 1, wherein the mobile termination of the repeater selects the random access resource (for transmitting the random access preamble) according to an ON/OFF state(s) indicated by the one or more third indication information.

11. The repeater according to claim 1, wherein when the mobile termination of the repeater performs random access, the forwarding unit is the off state (by default).

12. The repeater according to claim 1, wherein the mobile termination of the repeater receives fifth indication information, the fifth indication information being used to indicate that the forwarding unit is on or off when the mobile termination of the repeater performs the random access.

13. The repeater according to claim 1, wherein the mobile termination of the repeater is in an RRC_IDLE state or an RRC_CONNECTED state or an RRC_INACTIVE state.

14. The repeater according to claim 1, wherein the mobile termination and forwarding unit of the repeater have or do not have a capability to simultaneously transmit signals and/or simultaneously receive signals.

15. The repeater according to claim 14, wherein the mobile termination of the repeater transmits capability indication information used for indicating the capability.

16. The repeater according to claim 14, wherein the mobile termination and forwarding unit of the repeater have no capability to simultaneously transmit signals and/or simultaneously receive signals, and the mobile termination of the repeater transmits or does not transmit the capability indication information.

17. The repeater according to claim 1, wherein the random access comprises contention-based random access and/or contention-free random access.

18. The repeater according to claim 1, wherein the random access is used for at least one of the following:
initial access from an RRC_IDLE state;
an RRC connection re-establishment procedure;
DL/UL data arrival, during RRC_CONNECTED state or during the RRC_INACTIVE state (while SDT procedure is ongoing), when UL synchronization status is "non-synchronised";
UL data arrival, during RRC_CONNECTED state or during RRC_INACTIVE state (while SDT procedure is ongoing), when there are no PUCCH resources for SR available;
SR failure;
synchronous reconfiguration (e.g. handover) triggered/requested by RRC;
RRC connection resume procedure from RRC_INACTIVE state;
request for other SIs;
beam failure recovery;
consistent UL LBT failures on an SpCell;
SDT in RRC_INACTIVE state; and
positioning during RRC_CONNECTED state (e.g. when TA is needed for positioning).

19. A network device, **characterized in that** the network device comprises:
a transmitting unit configured to transmit indication information indicating ON/OFF of a forwarding unit of a repeater to a mobile termination of the repeater, and/or,
transmit second indication information to the mobile termination of the repeater, the second indication information being used to indicate that the forwarding unit performs or does not perform forwarding when the mobile termination is in an RRC_IDLE state or RRC _INACTIVE state.

20. A communication system, comprising a repeater as claimed in claim 1 and/ or a network device as claimed in claim 19.
